# EUROPEAN PATENT SPECIFICATION

(11) **EP 0 293 036 B1**
(45) Date of publication and mention of the grant of the patent: **06.04.1994**
(21) Application number: 88200980.6
(22) Date of filing: 14.11.1984
(51) Int. Cl.: B23Q 3/155, B23Q 1/00, B23B 31/02, G01B 7/00

(54) **Coupling for tool change apparatus**
Kupplung für Werkzeugwechselvorrichtung
Couplement pour dispositif de changement d'outils

(30) Priority: 15.11.1983 GB 8330412
(43) Date of publication of application: 30.11.1988
(62) Divisional of application: 84307886.6
(73) Proprietor: Renishaw plc, Wotton-Under-Edge Gloucestershire GL12 8JR (GB)
(72) Inventor: McMurtry, David Roberts, Gloucestershire, GL12 7EF (GB)
(74) Representative: Jackson, John Timothy

(56) References cited:
- DE-A- 2 647 633
- DE-A- 3 151 532
- FR-A- 2 343 553
- FR-A- 2 447 785
- US-A- 4 349 946
- PATENT ABSTRACTS OF JAPAN, vol. 4, no. 37 (M-4)[519], 27th March 1980, page 163M 4; & JP-A-55 11 716 (KURODA SEIKOU K.K.) 26-01-1980
- PATENT ABSTRACTS OF JAPAN, vol. 8, no. 35 (M-276)[1472], 15th February 1984;& JP-A-58 192 731 (TOUYOU SEIKI KOGYO K.K.) 10-11-1983

## Description

This invention relates to tool change apparatus for use in, for example, changing the measuring tools in coordinate measuring machines or changing cutting tools in machine tools.

British Patent No. 1,599,751 (DEA) shows a tool change apparatus which comprises a movable head and an exchangeable tool. The coupling between the head and the tool comprises first support surfaces arranged on the head at a plane transverse to an axis of the head, and second support surfaces arranged on the tool and engageable with the first support surfaces, the first and second support surfaces being adapted to define a kinematic support. The coupling further comprises a first coupling element provided on the head, and a second coupling element provided on the tool. The coupling element on the head is supported for rotational movement between positions of engagement with or disengagement from the other coupling element thereby to respectively secure the tool to the head and release it therefrom. The rotational movement is arranged to exert on the tool a force in the direction of the axis, thereby to establish engagement between the first and second support surfaces.

In this prior device, the movable coupling element is provided on a manually-operable handle, and has to be inserted into the other coupling element by moving the handle with a complex radial movement with respect to the axis of the head. Thus, coupling the tool to the head involves bringing the tool and the head together axially, followed by this radial insertion of the handle, followed by a rotation of the handle to cause the engagement of the coupling elements and thereby exert the force on the tool to establish engagement between the first and second support surfaces. This is a complicated sequence of operations which is difficult to provide automatically.

In the present invention, coupling elements in accordance with the characterising clause of claim 1 can be inserted into each other by an axial movement, which is much easier to provide automatically.

An example of apparatus according to this invention will now be described with reference to the accompanying drawings wherein:-
- Fig. 1: is an elevation of part of a coordinate measuring machine,
- Fig. 2: is a plan view of Fig. 1,
- Fig. 3: is a sectional and enlarged detail of Fig. 1,
- Fig. 4: is a section on the line IV-IV in Fig. 3 and
- Fig. 5: is a section on the line V-V in Fig. 4.

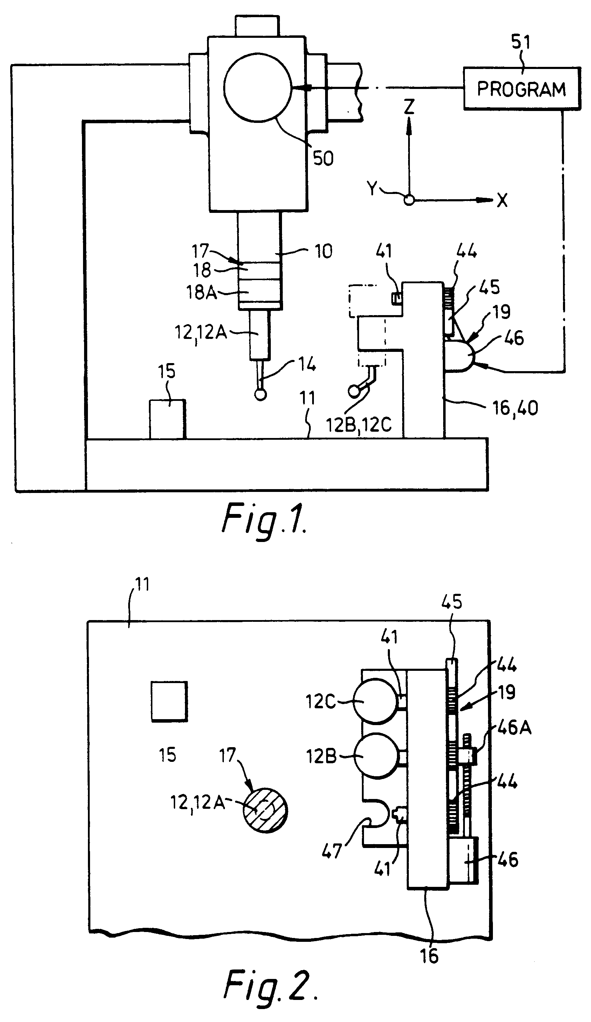

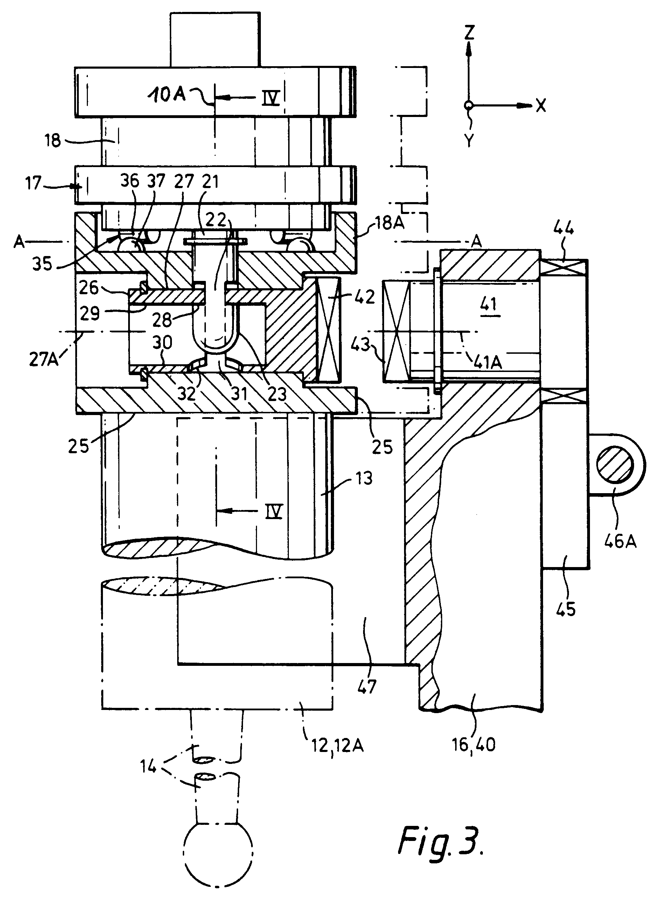

Referring to Figs. 1,2 the coordinate measuring machine has a head 10 supported for movement in mutually perpendicular directions X,Y,Z relative to a table 11 defining a fixed structure. The head 10 has a longitudinal axis extending in the Z direction. The head 10 supports a tool or probe 12A having a housing 13 (see Fig. 3) from which projects a stylus 14 whereby to engage a workpiece 15 for the purpose of measuring the workpiece, and the probe 12A is adapted to generate an electrical signal responsive to such engagement. Such signal generation is known per se e.g. from British Patent No. 1,445,977. The probe 12A is automatically interchangeable with other probes 12B,12C supported by a storage device or magazine 16 secured to the table 11. The different probes 12 have different construction or different styli as may be required for measuring different portions of the workpiece, or the magazine may contain such accessories as extension bars by which different probe assemblies may be built up.

The probes 12 are releasably secured to the head 10 by a coupling 17 comprising a first coupling part 18 secured to the head 10 and, in respect of each probe 12, a second coupling part 18A engageable with and releasable from the first part 18 by a mechanism 19 provided on the magazine 16.

Referring to Figs. 3 to 5, the first coupling part 18 comprises a body 20 secured to the head of the machine and a first coupling element or locking pin 21 projecting from the body 20 in the direction Z. At its free end the pin 21 is shaped to define a neck 22 and a relatively wider head 23. A spring 24 biases the pin 21 against withdrawal from the body 20. The second coupling part 18A comprises a body 25 secured to the probe housing 13 and supporting a second coupling element or cam 26 comprising a hollow cylindrical member 27 whose axis 27A (Fig. 3) extends in the direction X. The body 25 has a bore extending transversely to the axis 10A and supporting the member 27 for rotation about an axis 27A. At its interior the member 27 defines a cam surface 28 having a high portion 29 and a low portion 30. The interior of the hollow member 27 is open to the exterior thereof by a slot 31 sufficiently wide to embrace the neck 22 of the pin 21 and engage the head 23 thereof, and at the low portion 30 of the cam surface 28 the slot 31 has widened portion 32 through which to allow the head 23 to enter the interior of the member 27 or be withdrawn therefrom.

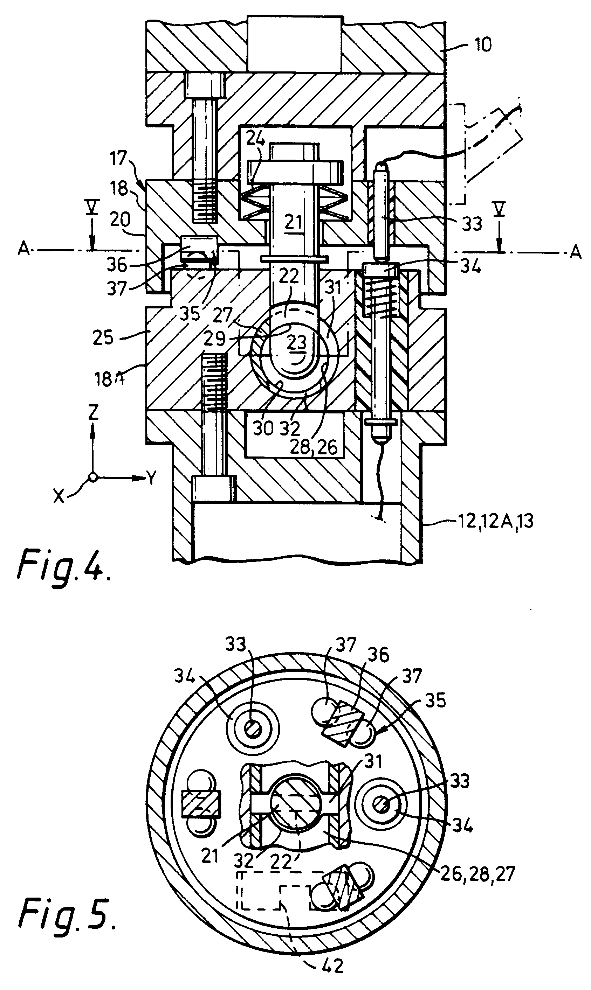

Figs. 3 to 5 show the coupling 17 in the engaged position, the head 23 engaging the high portion 29 of the cam surface. In this position of the coupling 17 the probe is located on the head by a kinematic support 35 (Figs. 4,5) defined by three cylindrical elements 36 secured to the body 20 of the first part 18 and each engaging mutually convergent surfaces of the respective pair of spherical elements 37 secured to the body 25 of the second part 18A. The elements 36,37 respectively define first and second support surfaces lying at a plane A-A transverse to the longitudinal axis of the head 10. The cam 26, acting through the pin 21 and the spring 24, exerts on the tool 12A a force in the direction of the longitudinal axis thereby to establish engagement between the elements 36,37.

The coupling 17 is disengageable by rotating the member 27, i.e. by movement of the surface 28 in the direction transversely to the longitudinal axis. Such rotation brings the widened portion 32 of the slot 31 into register with the head 23 so that the latter can be withdrawn from the interior of the member 27. The reverse of these actions engages the coupling 17. To operate the coupling 17 the magazine 16 comprises a frame 40 having, in respect of each probe 12 to be stored therein, an operating member 41 supported in the frame 40 for rotation about an axis 41A lying in the direction X and so positioned that a diametral slot 42 at one end of the cam member 27 can be engaged with a key 43 at the confronting end of the operating member 41. The member 41 has secured thereto a spur gear 44 engaged by a rack 45 driven by a motor 46 acting through a screw and nut gearing 46A.

To remove the tool from the head the latter is moved in the direction X to engage the slot 42 with the key 43. Thereafter the motor 46 is operated to rotate the member 27 and thereby disengage the coupling. Thereafter the head 10 is moved upwards in the direction Z to separate the parts 18,18A and thus separate the head 10 from the probe 12A. The latter is left behind on a fork 47 provided on the magazine frame 40 for the support of the probe 12A in the stored position, similar forks being provided for the probes 12B,12C. During said upward movement the pin 21 is withdrawn from the position of proximity with the cam 26 which the pin still has prior to separation of the parts 18,18A. To engage the couping 17 the head is moved downward in the direction of the axis 10A until proximity is established between the elements 36,37. This downward movement also brings the pin 21 into the position of proximity with the cam 26, necessary for engagement of the coupling 17.

The operating members 41 and gears 44 provided for the respective probes 12A,12B,12C, and the rack 45 and motor 46, constitute said mechanism 19 for engaging or disengaging the coupling 17. More specifically, the operating members 41 are provided in or on the magazine frame 40 in the sense of being supported for operating in positions adjacent the positions occupied, or to be occupied, in the magazine by the respective probes.

To make possible transmission of said probe signal from the probe 12A to the head 10 the coupling parts 18,18A embody pairs of electrical contacts 33,34 which are engaged when the parts 18,18A are engaged. The contacts 33 of each said pair are provided on the coupling part 18 with the contact surfaces lying at the plane A-A. The contacts 34 are provided on the part 18A in positions to engage the surfaces of the contacts 33 in the direction of the longitudinal axis of the head 10. The contacts 34 are spring-loaded as shown and are positioned to engage the contacts 33 when the tool engages the head at the elements 36,37.

The head 10 of the machine is movable by motors e.g. a motor 50 (Fig. 1) to positions specified by a program 51 in a manner known per se, and the program is adapted to move the head 10 to the magazine position and is further adapted to act on the motor 46 to operate the coupling 17.

It will be clear that the invention avoids relative rotation of the head and the tool about the longitudinal axis such as would lead to undue relative displacement between the contacts 33,34 in the plane A-A.

In a modification, not shown, the positions of the parts 18 and 18A are reversed, the part 18 being provided on the probe housing and the part 18A being provided on the head 11. In the latter case the coupling 17 can be operated by the mechanism 19 in a manner analagous to the illustrated example or it may be operated by a motor provided in the head. However, it is an advantage of the invention that the coupling 17 can be operated by an operating mechanism provided on or in the magazine 16 because this avoids difficulties which arise for example if there is not sufficient space in or at the head for the installation of the operating mechanism.

In a further modification the member 27 is arranged to extend from the member 18 so that the slot 42 lies outside the periphery of the member 18. This makes it possible for the slot 42 to be engaged with the key 43 by axial movement of the head 10, provided of course that the slot 42 and key 43 lie in the direction of the longitudinal axis during such movement of the head 10. Couplings such as 17 may be provided to connect extension bars to the head 10 before similarly connecting a probe to the free end of such an extension bar. Thus the extension bar would have a coupling element at each end and it would be held in the magazine in the same way as a probe.

## Claims

1. A coupling, for tool change apparatus which comprises a movable head (10) and an exchangeable tool (12), the head having an axis (10A), the coupling comprising:
first support surfaces (36) arranged on the head at a plane (A-A) transverse to said axis,
second support surfaces (37) arranged on the tool and engageable with the first support surfaces, the first and second support surfaces being adapted to define a kinematic support (35),
a first coupling element (21) provided on the head,
a second coupling element (26,27) provided on the tool,
one of the coupling elements (26,27) being supported on one of the tool and the head for rotational movement between positions of engagement with or disengagement from the other coupling element (21) thereby to respectively secure the tool to the head and release it therefrom, said one of the coupling elements (26,27) having a cam surface (28) which is arranged, during said rotational movement thereof in the sense of securing the tool to the head, to exert on the tool a force in the direction of said axis thereby to establish engagement between said first and second support surfaces,
characterised in that said one of the coupling elements (26,27) has a hollow interior which is open to the exterior in the direction of said axis, the hollow interior containing said cam surface (28), and in that said other coupling element (21) has a relatively wider head (23) which can pass axially into and out of said hollow interior of said one of the coupling elements through a widened portion (32) of its opening when said one of the coupling elements is in the position of disengagement, said wider head engaging the cam surface (28) in the hollow interior when said one of the coupling elements is in the position of engagement.

2. A coupling according to claim 1, wherein said one of the coupling elements (26,27) is provided on the tool, and the other coupling element (21) is provided on the head.

3. A coupling according to claim 1 or claim 2, wherein one of the coupling elements (21) is supported on one of the tool (12) and the head (10) through the intermediary of a spring (24).

4. A coupling according to any one of the preceding claims, comprising first electric contacts (33) provided on the head at a plane (A-A) transverse to said axis (10A), second electric contacts (34) provided on said tool (12), said second contacts being arranged to engage said first contacts when the tool engages the head at said support surfaces (36,37).

5. A coupling according to any one of the preceding claims, wherein said one of the coupling elements (26,27) has a slot (42) for engagement with a key (43) for actuating the coupling.

6. Tool change apparatus comprising:
a tool (12);
a storage device (16) having means for releasably supporting the tool in a stored position;
a head (10) which is capable of movement relative to the storage device for removal of the tool from the stored position and return of the tool thereto;
a coupling according to any one of the preceding claims for releasably coupling the tool (12) to the head (10);
operating means (19) for actuating the coupling by moving said one of the coupling elements (26,27) between the positions of engagement and disengagement;
wherein said operating means (19) includes an operating member (41) provided on said storage device (16).

7. Apparatus according to claim 6, wherein said one of the coupling elements (26,27) is arranged to be connectable and disconnectable from said operating member (41) by movement of the head (10) relative to the storage device (16).

8. Apparatus according to claim 7, wherein said one of the coupling elements (26,27) is connectable to and disconnectable from said operating member (41) by movement of the head (10) in a direction transverse to its axis (10A).

9. Apparatus according to any one of claims 6 to 8, in which the storage device (16) has a plurality of positions for storing a plurality of said tools (12A,12B,12C), each said position having a respective said operating member (41).

10. Apparatus according to claim 9, wherein the operating means (19) comprises a common motor (46) provided on the storage device (16).

## Patentansprüche

1. Kupplung für eine Werkzeugwechselvorrichtung, welche einen bewegbaren Kopf (10) und ein auswechselbares Werkzeug (12) umfaßt, wobei der Kopf eine Achse (10A) besitzt, und die Kupplung umfaßt:
erste, an dem Kopf an einer quer zur Achse gelegenen Ebene (A-A) angeordnete Stützflächen (36),
zweite, an dem Werkzeug angeordnete und mit den ersten Stützflächen in Eingriff bringbare Stützflächen (37), wobei die ersten und zweiten Stützflächen ausgelegt sind, eine kinematische Stütze (35) zu definieren, ein erstes, an dem Kopf vorgesehenes Kupplungselement (21),
ein zweites, an dem Werkzeug vorgesehenes Kupplungselement (26,27),
von denen ein Kupplungselement (26,27) entweder am Werkzeug oder am Kopf zur Rotationsbewegung zwischen Positionen des Eingriffs mit oder des Lösens von dem anderen Kupplungselement (21) abgestützt ist, um dabei jeweils das Werkzeug sicher an dem Kopf zu befestigen oder davon zu lösen, wobei das eine Kupplungselement (26,27) eine Nockenfläche (28) besitzt, die dazu ausgelegt ist, während seiner Drehbewegung im Sinne des Sicherns des Werkzeugs an dem Kopf auf das Werkzeug eine Kraft in Richtung der Achse auszuüben, um dadurch einen Eingriff zwischen der ersten und der zweiten Stützfläche einzurichten,
dadurch gekennzeichnet, daß das eine Kupplungselement (26,27) einen in Achsenrichtung nach außen offenen hohlen Innenraum besitzt, der die Nockenfläche (28) enthält, und daß das andere Kupplungselement (21) einen relativ breiteren Kopf (23) besitzt, der in Achsenrichtung in den hohlen Innenraum des einen Kupplungselements eintreten und aus ihm herausgelangen kann durch einen erweiterten Abschnitt (32) von dessen Öffnung, wenn das eine Kupplungselement sich in seiner Lösestellung befindet, wobei der breitere Kopf mit der Nockenfläche (28) in dem hohlen Innenraum in Eingriff tritt, wenn das eine Kupplungselement sich in der Eingriffstellung befindet.

2. Kupplung nach Anspruch 1, bei der das eine Kupplungselement (26,27) an dem Werkzeug und das andere Kupplungselement (21) an dem Kopf vorgesehen ist.

3. Kupplung nach Anspruch 1 oder 2, bei dem eines (21) der Kupplungselemente an einem der Teile Werkzeug (12) oder Kopf (10) unter Zwischenwirkung einer Feder (24) abgestützt ist.

4. Kupplung nach einem der vorangehenden Ansprüche mit ersten an dem Kopf an einer zu der Achse (10A) quer verlaufenden Ebene vorgesehenen elektrischen Kontakten (33), zweiten, an dem Werkzeug vorgesehenen elektrischen Kontakten (34), welche zweiten Kontakte so angeordnet sind, daß sie mit den ersten Kontakten in Eingriff kommen, wenn das Werkzeug mit dem Kopf an den Stützflächen (36,37) in Eingriff kommt.

5. Kupplung nach einem der vorangehenden Ansprüche, bei der das eine Kupplungselement (26,27) einen Schlitz (42) zum Eingriff mit einem Keil (43) zum Betätigen der Kupplung besitzt.

6. Werkzeugwechselvorrichtung, welche umfaßt:
ein Werkzeug (12);
ein Speichergerät (16) mit Mitteln zum lösbaren Stützen des Werkzeugs in einer Speicherposition;
einen Kopf (10), der zur Bewegung relativ zu dem Speichergerät fähig ist, um das Werkzeug aus der Speicherposition zu entfernen und das Werkzeug dahin zurück zu führen;
eine Kupplung nach einem der vorangehenden Ansprüche zum lösbaren Kuppeln des Werkzeugs (12) mit dem Kopf (10);
Betätigungsmittel (19), um die Kupplung durch Bewegen des einen (26,27) Kupplungselements zwischen der Eingriffs- und der Löseposition zu betätigen;
wobei das Betätigungsmittel (19) ein an dem Speichergerät (16) vorgesehenes Betätigungsglied (41) enthält.

7. Vorrichtung nach Anspruch 6, bei der das eine (26,27) Kupplungselement ausgelegt ist, durch Bewegen des Kopfes (10) relativ zu dem Speichergerät mit dem Betätigungsglied (41) verbindbar und von ihm lösbar zu sein.

8. Vorrichtung nach Anspruch 7, bei der das eine Kupplungselement (26,27) durch Bewegen des Kopfes (10) in einer Richtung quer zu seiner Achse (10A) mit dem Betätigungsglied (41) verbindbar und von ihm lösbar ist.

9. Vorrichtung nach einem der Ansprüche 6 bis 8, bei der das Speichergerät (16) eine Vielzahl von Positionen zum Speichern einer Vielzahl der Werkzeuge (12A,12B,12C) besitzt, von denen jede Position ein jeweiliges Betätigungsglied (41) besitzt.

10. Vorrichtung nach Anspruch 9, bei der das Betätigungsmittel (19) einen an dem Speichergerät (16) vorgesehenen gemeinsamen Motor (46) umfaßt.

## Revendications

1. Accouplement pour appareil de changement d'outil qui comprend une tête mobile (10) et un outil échangeable (12), la tête ayant un axe (10A) et l'accouplement comprenant:
des premières surfaces de support (36) disposées sur la tête dans un plan (A-A) transversal par rapport audit axe,
des deuxièmes surfaces de support (37) disposées sur l'outil et pouvant s'engager avec les premières surfaces de support, les premières et deuxièmes surfaces de support étant adaptées pour définir un support cinématique (35),
un premier élément d'accouplement (21) prévu sur la tête,
un deuxième élément d'accouplement (26, 27) prévu sur l'outil,
l'un des éléments d'accouplement (26, 27) étant supporté sur l'outil ou sur la tête pour un mouvement de rotation entre les positions d'engagement ou de désengagement avec l'autre élément d'accouplement (21), pour fixer ainsi l'outil à la tête et l'en libérer, ledit élément d'accouplement (26, 27) ayant une surface excentrique (28) qui est disposée, pendant ledit mouvement de rotation dudit élément, dans le sens de la fixation de l'outil à la tête, pour exercer sur l'outil une force dans la direction dudit axe et établir ainsi l'engagement entre lesdites première et deuxième surfaces de support,
caractérisé en ce que ledit élément d'accouplement (26, 27) a un intérieur creux qui est ouvert à l'extérieur dans la direction dudit axe, l'intérieur creux contenant ladite surface excentrique (28), et en ce que ledit autre élément d'accouplement (21) a une tête relativement plus large (23) qui peut entrer axialement dans ledit intérieur creux de l'un desdits éléments d'accouplement, et en sortir, par une partie élargie (32) de son ouverture lorsque ledit élément d'accouplement est dans la position de désengagement, ladite tête plus large s'engageant avec la surface excentrique (28) dans l'intérieur creux lorsque ledit élément d'accouplement est dans la position d'engagement.

2. Accouplement selon revendication 1, dans lequel ledit élément d'accouplement (26, 27) est prévu sur l'outil, et l'autre élément d'accouplement (21) est prévu sur la tête.

3. Accouplement selon revendication 1 ou revendication 2, dans lequel l'un des éléments d'accouplement (21) est supporté sur l'outil (12) ou la tête (10) par l'intermédiaire d'un ressort (24).

4. Accouplement selon l'une quelconque des revendications précédentes, comprenant des premiers contacts électriques (33) prévus sur la tête dans un plan (A-A) transversal par rapport audit axe (10A), des deuxièmes contacts électriques (34) prévus sur ledit outil (12), lesdits deuxièmes contacts étant agencés de manière à s'engager avec lesdits premiers contacts lorsque l'outil s'engage avec la tête au niveau desdites surfaces de support (36, 37).

5. Accouplement selon l'une quelconque des revendications précédentes, dans lequel ledit élément d'accouplement (26, 27) a une rainure (42) s'engageant avec une clavette (43) pour actionner l'accouplement.

6. Appareil de changement d'outil comprenant:
un outil (12);
un dispositif de rangement (16) ayant un moyen de support de l'outil dans une position de rangement d'où il puisse être libéré;
une tête (10) qui peut se déplacer par rapport au dispositif de rangement pour enlever l'outil de la position de rangement et l'y ramener;
un accouplement selon l'une quelconque des revendications précédentes pour accoupler l'outil (12) à la tête (10) de telle sorte qu'il puisse en être libéré;
un moyen de commande (19) pour actionner l'accouplement en déplaçant ledit élément d'accouplement (26, 27) entre les positions d'engagement et de désengagement;
dans lequel ledit moyen de commande (19) comprend un élément de commande (41) prévu sur ledit dispositif de rangement (16).

7. Appareil selon revendication 6, dans lequel ledit élément d'accouplement (26, 27) est disposé de manière à pouvoir être connecté audit élément de commande (41) et à en être déconnecté par le déplacement de la tête (10) par rapport au dispositif de rangement (16).

8. Appareil selon revendication 7, dans lequel ledit élément d'accouplement (26, 27) peut être connecté audit élément de commande (41) et en être déconnecté par déplacement de la tête (10) dans une direction transversale par rapport à son axe (10A).

9. Appareil selon l'une quelconque des revendications 6 à 8, dans lequel le dispositif de rangement (16) a une pluralité de positions pour ranger une pluralité desdits outils (12A, 12B, 12C), chacune desdites positions ayant un élément de commande respectif (41).

10. Appareil selon revendication 9, dans lequel le moyen de commande (19) comprend un moteur commun (46) prévu sur le dispositif de rangement (16).
